Europäisches Patentamt

European Patent Office

Office européen des brevets

(19)

(11) Veröffentlichungsnummer : **0 316 272 B1**

# (12) EUROPÄISCHE PATENTSCHRIFT

(45) Veröffentlichungstag der Patentschrift :
**03.04.91 Patentblatt 91/14**

(51) Int. Cl.$^5$ : **F16B 19/14**

(21) Anmeldenummer : **88810734.9**

(22) Anmeldetag : **26.10.88**

(54) Befestigungselement zum Eintreiben in harte Werkstoffe.

(30) Priorität : **12.11.87 DE 3738471**

(43) Veröffentlichungstag der Anmeldung :
**17.05.89 Patentblatt 89/20**

(45) Bekanntmachung des Hinweises auf die
Patenterteilung :
**03.04.91 Patentblatt 91/14**

(84) Benannte Vertragsstaaten :
**AT BE CH DE FR GB IT LI SE**

(56) Entgegenhaltungen :
**DE-A- 2 849 139
US-A- 2 944 261**

(73) Patentinhaber : **HILTI Aktiengesellschaft
FL-9494 Schaan (LI)**

(72) Erfinder : **Beck, Josef
Rhätikonstrasse 18
FL-9490 Vaduz (LI)**
Erfinder : **Hachtel, Hans
Vorarlbergerstrasse 47
FL-9486 Schaanwald (LI)**
Erfinder : **Tobler, Alfred
Giessenstrasse 248
FL-9491 Ruggell (LI)**

(74) Vertreter : **Wildi, Roland
Hilti Aktiengesellschaft Patentabteilung
FL-9494 Schaan (LI)**

## Beschreibung

Die Erfindung betrifft ein Befestigungselement mit einem in harte Werkstoffe, wie Beton, Mauerwerk, Gestein und dergleichen eintreibbaren Schaftteil eines Schaftes, an den sich entgegen der Eintreibrichtung ein Lastangriffsmittel anschliesst. Es ist bekannt, Gegenstände mittels nagelartiger Befestigungselemente an Bauteilen aus hartem Werkstoff festzulegen, wobei die Befestigungselemente mittels pulverkraftbetriebener Setzgeräte durch Pulverkraft in den Werkstoff eingetrieben werden. Ein grosser Vorteil dieser Befestigungsmethode ist der geringe erforderliche Zeitaufwand. Als nachteilig erweist sich, dass die Befestigungselemente beim Eindringen in den Werkstoff im Bereich der Befestigungszone derart hohe Spannungen bewirken, dass kraterförmige Ausplatzungen entstehen.

Um Ausplatzungen zu vermeiden, ist aus der DE-A-28 49 139 ein Verfahren bekannt, gemäss welchem durch den Boden eines im Werkstoff vorgefertigten Sackloches hindurch mittels Pulverkraft ein Befestigungselement eingetrieben wird. Dadurch werden oberflächenseitige Spannungen wirkungsvoll vermieden. Für das Eintreiben des Befestigungselementes nach diesem Verfahren muss allerdings ein hoher Zeit- und Manipulationsaufwand in Kauf genommen werden.

Der Erfindung liegt die Aufgabe zugrunde, ein Befestigungselement zu schaffen, das mit geringem Zeit- und Manipulationsaufwand unter Vermeidung von Ausplatzungen in harte Werkstoffe eintreibbar ist.

Erfindungsgemäss wird die Aufgabe dadurch gelöst, dass in Eintreibrichtung sich an den Schaft ein Bohrkopf an schliesst und der sich entgegen der Eintreibrichtung an den Schaft anschliessende Bereich Drehmitnahmemittel mit Angriffsflächen aufweist.

Der an den Schaft anschliessende Bohrkopf erlaubt unter Drehung des Befestigungselementes das Bohren eines Sackloches im Werkstoff. Die Drehung kann, gegebenenfalls überlagert von Schlägen, dem Befestigungselement über die Angriffsflächen des Drehmitnahmemittels von einem entsprechenden Antriebsgerät erteilt werden. Nach Erreichen einer beispielsweise der halben Schaftlänge entsprechenden Lochtiefe kann das Befestigungselement mit dem den Bohrkopf tragenden Schaftteil durch Pulverkraft in die Endlage eingetrieben werden. Diese Art des Eintreibens des Befestigungselementes spart Zeit- und Manipulationsaufwand, indem der Bohrvorgang und der Eintreibvorgang durch Pulverkraft in direkter Aufeinanderfolge stattfinden. Das beispielsweise als Kopf oder Gewindeansatz ausgebildete Lastangriffsmittel überragt den Werkstoff und gewährleistet ein sicheres, auch optisch einwandfreies Festlegen von Gegenständen. Bei letzteren kann es sich beispielsweise um Blech handeln, das zu Beginn des Eintreibvorganges vom Bohrkopf durchbohrt wird.

Mit Vorteil weist der Bohrkopf zwei kegelig aufeinander zulaufende Schneiden auf. Im Zentrum des Bohrkopfes bildet sich so eine Spitze, welche beim Bohrvorgang einen zentrischen Rundlauf des Befestigungselementes gewährleistet. Der von den Schneiden eingeschlossene Kegelwinkel beträgt zweckmässig etwa 120°. Der Aussendurchmesser des Bohrkopfes kann den diesen tragenden Schaftbereich mit kleinerem Durchmesser radial überragen.

Die Schneiden weisen gegenüber den übrigen Teilen des Bohrkopfes mit Vorteil eine höhere Härte auf. Dadurch lässt sich insbesondere in Verbindung mit allfälliger, der Drehung überlagerter Schlagabgabe an das Befestigungselement ein hoher Bohrfortschritt auch in besonders harten Werkstoffen erzielen, ohne dass es zu einer nennenswerten Verformung des Bohrkopfes kommt.

Vorzugsweise sind die Schneiden Teil einer in den Bohrkopf eingesetzten Hartmetallplatte. Diese ist zweckmässig durch eine Lötung im Schaft festgelegt.

Nach einer anderen Ausführungsart ist der Bohrkopf einstückig an den Schaft angeformt. Die Schneiden sind dabei zweckmässig gehärtet. Besonders bewährt hat sich das induktive Härten oder das Impulshärten der Schneiden.

Nach einer weiteren Ausführungsform sind die Schneiden mit einem Hartstoff beschichtet. Der Hartstoff wird beispielsweise in Form eines Hartmetall-Pulvergemisches, wie Wolframkarbid, durch Flammspritzen aufgebracht.

Mit Vorteil sind die Drehmitnahmemittel als sich entgegen der Eintreibrichtung an das Lastangriffsmittel anschliessender Fortsatz ausgebildet. Der die Angriffsflächen aufweisende Fortsatz erlaubt den formschlüssigen Angriff von Mitnahmeteilen eines Antriebsgerätes zwecks Uebertragung eines Drehmomentes als auch das Uebertragen von Schlägen. Der Fortsatz kann durch Kaltumformung geschaffen werden.

Einem anderen Vorschlag der Erfindung entsprechend sind die Drehmitnahmemittel als die Umfangskontur des Lastangriffsmittels überragende Vorsprünge ausgebildet. Die Vorsprünge sind zweckmässig scheibenartig ausgebildet und an den Schaft angeformt. Der grosse Durchmesser der die Angriffsflächen aufweisenden Vorsprünge erlaubt das Uebertragen grosser Drehmomente. Ferner können die Vorsprünge auch der Drehbewegung überlagerte Schläge aufnehmen.

Nach einer bevorzugten Ausfürhrungsform ist zwischen Schaftteil und Lastangriffsmittel ein Schaftbereich von gegenüber dem Durckmesser des Bohrkoptes grösserem Durchmesser vorgesehen. Der Schaftbereich findet im Sackloch eine seitliche Abstützung und trägt so zu einer Schrägstellung unterbindenden guten Führung des Befestigungselementes beim Eintreiben bei.

Zweckmässig beträgt das Durchmesserverhältnis von Bohrkopf zu Schaftbereich mit grösserem Durchmesser 1 : 1,1 bis 1 : 1,3. Durch diese durchmessermässige Astimmung wird einerseits ein spielfreies Eintreten des Schaftbereiches mit grösserem Durchmesser in das vom Bohrkopf erstellte Sackloch gewährleistet. Andererseits wird verhindert, dass der Schaftbereich einen zu hohe Spannungen im Bereich der Befestigungszone verursachenden Sitz im Werkstoff erlangt.

Die Erfindung wird nachstehend anhand einer Zeichnung, die Ausführungsbeispiele wiedergibt, näher erläutert. Es zeigen :

Fig. 1 ein Befestigungselement in Ansicht ;

Fig. 2 den Vorderbereich des Befestigungselementes nach Fig. 1 in um 90° verdrehter Stellung;

Fig. 3 einen Schnitt durch das Befestigungselement gemäss Schnittverlauf III-III in Fig. 2 ;

Fig. 4 eine weitere Ausführungsform eines Befestigungselementes in Ansicht.

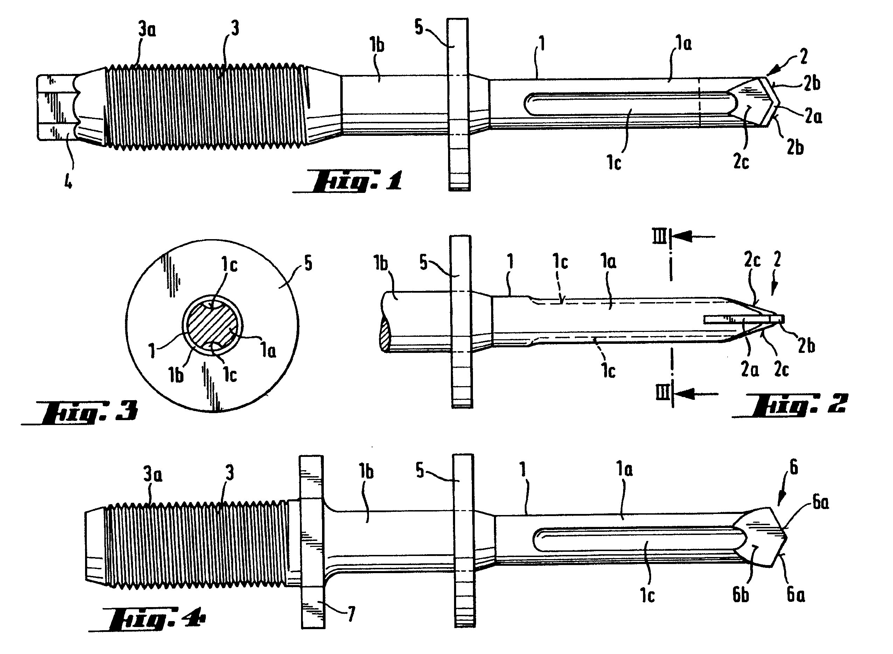

Das Befestigungselement nach Fig. 1 besteht aus einem Schaft 1, einem in Eintreibrichtung an den Schaft 1 anschliessenden Bohrkopf 2, einem an den Schaft 1 entgegen der Eintreibrichtung anschliessenden Lastangriffsmittel 3 und einem an dieses angeformten Fortsatz 4 mit Angriffsflächen, gebildet durch einen sechseckigen Querschnitt. Der Schaft 1 ist unterteilt in ein den Bohrkopf 2 tragendes Schaftteil 1a und einen entgegen der Eintreibrichtung weisenden Schaftbereich 1b mit grösserem Durchmesser. Auf dem Schaftbereich 1b sitzt reibschlüssig eine in einem Antriebsgerät dem Führungszwecke dienende Rondelle 5.

Der Bohrkopf 2 verfügt über eine durch Verlöten festgelegte Hartmetallplatte 2a, deren in Eintreibrichtung weisende Stirnseite zwei kegelig aufeinander zu laufende Schneiden 2b bildet. Die Härte der Schneiden 2b ist grösser als jene des übrigen Teiles des Bohrkopfes 2. Die Fig. 2 zeigt die achsmittige Anordnung der Hartmetallplatte 2a im Bohrkopf 2 und zeigt ferner, dass der Bohrkopf 2 durch Anflachungen 2c in Eintreibrichtung symmetrisch verjüngt ist. Das an den Bohrkopf 2 anschliessende Schaftteil 1a verfügt über zwei Ableitnuten 1c mit kreisbogenförmigem Grund, wie dies die Fig. 3 verdeutlicht. Der Durchmesser des Schaftbereiches 1b entspricht etwa dem 1,2-fachen des Durchmessers des Bohrkopfes 2. Das Lastangriffsmittel 3 verfügt über ein Aussengewinde 3a, dessen Aussendurchmesser den Durchmesser des Fortsatzes 4 sowie den Durchmesser des Schaftbereiches 1b übersteigt.

Das Befestigungselement nach Fig. 4 ist in den mit dem Befestigungselement nach Fig. 1 übereinstimmenden Teilen aus Gründen der Vereinfachung mit gleichen Bezugszeichen versehen. In Abweichung zu dem Befestigungselement nach Fig. 1, trägt der Schaft 1 einen an diesen einstückig angeformten Bohrkopf 6, sowie anstelle des Fortsatzes 4 zwischen dem Schaftbereich 1b mit grösserem Durchmesser und dem Lastangriffsmittel 3 einen scheibenförmigen angeformten Vorsprung 7 mit polygonaler Umfangskontur als Drehmitnahmemittel. Der Bohrkopf 6 verfügt wiederum über stirnseitige, kegelig aufeinander zulaufende Schneiden 6a. Anflachungen 6b schaffen eine symmetrische Verjüngung des Bohrkopfes 6 in Eintreibrichtung. Die Schneiden 6a sind durch Beschichtung mit einem Hartstoff gegenüber den übrigen Teilen des Bohrkopfes 6 gehärtet. Der Durchmesser des Bohrkopfes 6 überragt geringfügig den Durchmesser des angrenzenden Schaftteiles 1a und stimmt mit dem Durchmesser des verdickten Schaftbereiches 1b überein.

## Ansprüche

1. Befestigungselement mit einem in harte Werkstoffe, wie Beton, Mauerwerk, Gestein und dergleichen, eintreibbaren Schaftteil (1a) eines Schaftes (1), an den sich entgegen der Eintreibrichtung ein Lastangriffsmittel (3) anschliesst, **gekennzeichnet dadurch,** dass in Eintreibrichtung sich an den Schaft (1) ein Bohrkopf (2, 6) anschliesst und der sich entgegen der Eintreibrichtung an den Schaft (1) anschliessende Bereich Drehmitnahmemittel (4, 7) mit Angriffsflächen aufweist.

2. Befestigungselement nach Anspruch 1, dadurch gekennzeichnet, das der Bohrkopf (2, 6) zwei kegelig aufeinander zulaufende Schneiden (2b, 6a) aufweist.

3. Befestigungselement nach Anspruch 2, dadurch gekennzeichnet, dass die Schneiden (2b, 6a) gegenüber den übrigen Teilen des Bohrkopfes (2, 6) eine höhere Härte aufweisen.

4. Befestigungselement nach Anspruch 3, dadurch gekennzeichnet, dass die Schneiden (2b) Teil einer in den Bohrkopf (2) eingesetzten Hartmetallplatte (2a) sind.

5. Befestigungselement nach Anspruch 3, dadurch gekennzeichnet, dass die Schneiden (2b, 6a) gehärtet sind.

6. Befestigungselement nach Anspruch 3, dadurch gekennzeichnet, dass die Schneiden (6a) mit einem Hartsfoff beschichtet sind.

7. Befestigungselement nach einem der Ansprüche 1 bis 6, dadurch gekennzeichnet, dass die Drehmitnahmemittel als sich entgegen der Eintreibrichtung an das Lastangriffsmiffel (3) anschliessender Fortsatz (4) ausgebildet sind.

8. Befestigungselement nach einem der Ansprüche 1 bis 6, dadurch gekennzeichnet, dass die Drehmitnahmemittel als die Umfangskontur des Lastangriffsmittels (3) überragende Vorsprünge (7) ausgebildet sind.

9. Befestigungselement nach einem der Ansprüche 1 bis 8, dadurch gekennzeichnet, dass zwischen Schaftteil (1a) und Lastangriffsmittel (3) ein Schaftbereich (1b) von gegenüber dem Durchmesser des Bohrkopfes (2, 6) grösserem Durchmesser vorgesehen ist.

10. Befestigungselement nach Anspruch 9, dadurch gekennzeichnet, dass daß Durchmesserverhältnis von Bohrkopf (2,6) zu Schaffbereich (1b) mit grösserem Durchmesser 1 : 1,1 bis 1 : 1,3 befrägt.

## Claims

1. Fastening element having a shaft (1), with a shaft section (1a) suitable for driving into hard materials, such as concrete, bricks, stones and the like, which shaft is joined to load-engaging means (3) opposite to the direction of penetration, **characterised in that** a drill tip adjoins the shaft (1) in the direction of penetrations, and in that the area adjacent to the shaft (1) opposite to the direction of penetration has rotary pick-up means (4, 7) with engagement sufaces.

2. Fastening element according to claim 1, **characterised in that** the drill tip (2, 6) has two cutters (2b, 6a), which extend towards each other in conically tapering manner.

3. Fastening element according to claim 2, **characterised in that** the cutters (2b, 6a) are of greater hardness than the other parts of the drill tip (2, 6).

4. Fastening element according to claim 3, **characterised in that** the cutters (2b) are part of a hard-metal plate (2a), which is inserted into the drill head (2).

5. Fastening element according to claim 3, **characterised in that** the cutters (2b, 6a) are hardened.

6. Fastening element according to claim 3, **characterised in that** the cutters (6a) are coated with a hard material.

7. Fastening element according to one of claims 1 to 6, **characterised in that** the rotary pick-up means is formed as an extension (4) adjacent to the load-engaging means (3) opposite to the direction of penetration.

8. Fastening element according to one of claims 1 to 6, **characterised in that** the rotary pick-up means are formed as protrusions (7) which extend beyond the circumferential contour of the load-engaging means (3).

9. Fastening element according to one of claims 1 to 8, **characterised in that** a shaft area (1b) of larger diameter relative to the diameter of the drill tip (2, 6) is provided between the shaft section (1a) and the load-engaging means (3).

10. Fastening element according to claim 9, **characterised in that** the diameter ratio between the drill tip (2, 6) and the shaft area (1b) of larger diameter is between 1 : 1.1 and 1 : 1.3.

## Revendications

1. Elément de fixation, comprenant une section de tige (1a) d'une tige (1) pouvant être enfoncée dans des matériaux durs tels que du béton, de la maçonnerie, des roches et analogues, à laquelle fait suite, dans le sens opposé à la direction d'enfoncement, un moyen d'application de charge (3), **caractérisé en ce que**, dans la direction d'enfoncement, la tige (1) est suivie d'une tête de foret (2, 6) et que la région faisant suite à la tige (1) dans le sens opposé à la direction d'enfoncement comporte des moyens d'entraînement en rotation (4, 7) avec des surfaces d'entraînement.

2. Elément de fixation selon la revendication 1, caractérisé en ce que la tête de foret (2, 6) présente deux tranchants (2b, 6a) convergeant de manière conique.

3. Elément de fixation selon la revendication 2, caractérisé en ce que les tranchants (2b, 6a) présentent une dureté supérieure à celle des autres éléments de la tête de foret (2, 6).

4. Elément de fixation selon la revendication 3, caractérisé en ce que les tranchants (2b) font partie d'une plaque de métal dur (2a) insérée dans la tête de foret (2).

5. Elément de fixation selon la revendication 3, caractérisé en ce que les tranchants (2b, 6a) sont trempés.

6. Elément de fixation selon la revendication 3, caractérisé en ce que les tranchants (6a) sont revêtus d'un matériau à résistance mécanique élevée.

7. Elément de fixation selon l'une des revendications 1 à 6, caractérisé en ce que les moyens d'entraînement en rotation sont réalisés sous la forme d'un prolongement (4) qui, dans le sens opposé à la direction d'enfoncement, fait suite au moyen d'application de charge (3).

8. Elément de fixation selon l'une des revendications 1 à 6, caractérisé en ce que les moyens d'entraînement en rotation sont réalisés sous la forme de saillies (7) dépassant du contour périphérique du moyen d'application de charge (3).

9. Elément de fixation selon l'une des revendications 1 à 8, caractérisé en ce qu'entre la partie de tige (1a) et le moyen d'application de charge (3) est prévue une section de tige (1b) dont le diamètre est supérieur au diamètre de la tête de foret (2, 6).

10. Elément de fixation selon la revendication 9, caractérisé en ce que le rapport des diamètres de la tête de foret (2, 6) et de la section de tige (1b) présentant le diamètre plus grand est de 1 : 1,1 à 1 : 1,3.

**Fig. 1**

**Fig. 3**

**Fig. 2**

**Fig. 4**

EP 0 316 272 B1